# FASCICULE DE BREVET EUROPEEN

(11) **EP 1 852 347 B1**
(45) Date de publication et mention de la délivrance du brevet: **01.07.2009**
(21) Numéro de dépôt: 07107389.4
(22) Date de dépôt: 03.05.2007
(51) Int. Cl.: B64D 31/00

(54) **Système d'alimentation et de commande d'équipements électriques d'un moteur d'aéronef ou de son environnement**
Versorgungs- und Steuersystem für elektrische Ausstattungen eines Flugzeugmotors oder seiner Umgebung
System for powering and controlling electrical equipment of an aircraft motor or of its environment

(30) Priorité: 05.05.2006 FR 0651637
(43) Date de publication de la demande: 07.11.2007
(73) Titulaire: HISPANO-SUIZA, 92700 Colombes (FR)
(72) Inventeur: Berenger, Serge, 94550 Chevilly Larue (FR)
(74) Mandataire: Joly, Jean-Jacques

(56) Documents cités:
- EP-A2- 0 409 226
- WO-A-02/058206
- DE-A1- 2 319 319
- DE-A1- 3 916 388
- JP-A- 3 265 430
- US-A- 5 233 286

## Description

### Arrière-plan de l'invention

L'invention concerne l'alimentation en énergie électrique et la commande d'équipements électriques d'un moteur d'aéronef et/ou de son environnement.

Le domaine d'application de l'invention est plus particulièrement celui des moteurs d'avion, notamment des moteurs à turbine à gaz. L'invention est toutefois aussi applicable à des moteurs d'hélicoptère.

Par équipements électriques d'un moteur d'aéronef ou de son environnement, on entend ici non seulement des équipements électriques utiles pour le fonctionnement même du moteur, mais aussi des équipements électriques associés à la nacelle du moteur, tels que par exemple des circuits électriques de dégivrage ou d'antigivrage, ou des actionneurs électromécaniques d'inverseurs de poussée pour un moteur d'avion à turbine à gaz, voire même associés à la voilure portant le moteur, tels que par exemple des circuits électriques de dégivrage ou d'antigivrage de voilure d'avion.

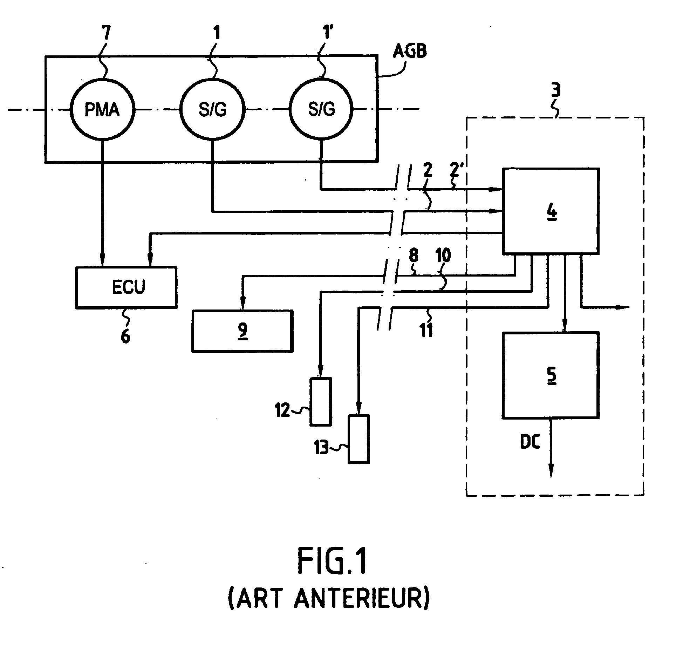

Un schéma traditionnel de production et de distribution d'énergie électrique à partir d'un moteur d'avion à turbine à gaz est montré sur la figure 1.

Deux générateurs 1, 1' (voire plus de deux à titre de redondance ou d'optimisation de la génération de puissance électrique selon l'application considérée) sont montés sur un boîtier de transmission, ou boîtier d'entraînement d'accessoires AGB («Accessory Gear Box») qui est couplé mécaniquement à un arbre de turbine du moteur. Les générateurs sont typiquement des démarreurs/générateurs, ou S/G (pour "Starter/Generator") comprenant une génératrice synchrone qui est associée à une excitatrice et qui fournit une tension alternative à fréquence variable en fonction du régime du moteur, l'ensemble excitatrice et génératrice synchrone étant commandé pour fonctionner en mode moteur synchrone au démarrage de la turbine.

Les tensions alternatives fournies par les générateurs 1, 1' sont acheminées par des lignes 2, 2' à un réseau électrique 3 de distribution d'énergie électrique à bord de l'avion, ou réseau de bord avion. Un circuit 4 du réseau de bord avion connecté aux lignes 2, 2' fournit une tension alternative régulée, typiquement 115 Vac ou 230 Vac, sur un ou plusieurs bus de distribution. Le circuit 4 alimente aussi un convertisseur de tension 5 qui fournit une tension continue régulée, typiquement 270 Vdc ou +/- 270 Vdc, sur un ou plusieurs bus. Les tensions fournies par les circuits 4 et 5 alimentent différentes charges électriques à bord de l'avion, principalement dans la zone fuselage.

Au niveau du moteur, une unité 6 de contrôle électronique du moteur, ou ECU (pour "Engine Control Unit") est alimentée par un générateur 7 tel qu'un générateur à aimants permanents, ou PMA (pour "Permanent Magnet Alternator") monté sur le boîtier de transmission AGB. L'ECU est reliée également à l'un des bus 4, 5, par exemple le bus 4 de tension alternative régulée, pour pouvoir être alimenté correctement tant qu'un régime moteur suffisant n'a pas été atteint pour assurer la fourniture par le PMA de l'énergie électrique requise, ou en cas de défaut du PMA. L'ECU utilise l'énergie électrique reçue pour permettre le fonctionnement de ses composants et exciter différents éléments du moteur tels que des sondes ou capteurs, des actionneurs ou des servovalves requérant une puissance électrique limitée.

Il y a une tendance actuelle à substituer de plus en plus l'énergie électrique à l'énergie hydraulique pour actionner différents équipements électriques d'un moteur d'aéronef ou de son environnement. Ainsi, certains avions sont équipés d'inverseurs de poussée à actionnement électrique de sorte qu'une ligne d'alimentation électrique 8 doit relier le réseau de bord 3 de l'avion à un tel inverseur de poussée électrique 9. Une telle ligne s'ajoute à celles nécessaires à l'alimentation équipements statiques, telles que des lignes 10, 11 d'alimentation de circuits 12, 13 de dégivrage de la nacelle du moteur et de la voilure portant le moteur.

On connaît par les brevets EP 0 409 226 et WO 02/058206 des systèmes d'alimentation électrique qui vise une flexibilité d'alimentation.

Il existe un besoin d'un système simple et sécurisé permettant d'activer un nombre croissant d'équipements électriques d'un moteur et de son environnement sans multiplier les liaisons entre un réseau de bord de l'avion et les équipements électriques concernés.

### Objet et résumé de l'invention

L'invention propose à cet effet un système d'alimentation et de commande d'équipements électriques d'un moteur d'aéronef et/ou de son environnement, comprenant :
- au moins un bus d'alimentation en tension électrique continue,
- au moins un ensemble de modules d*'*alimentation reliés en parallèle au bus d*'*alimentation, ledit ensemble étant associé à un groupe respectif d'équipements électriques, les modules de l'ensemble étant en nombre supérieur au nombre minimum pour l'activation des équipements électriques du groupe de manière à ménager au moins un module de secours, chaque module comportant un convertisseur de tension pour fournir en sortie du module une tension alternative à partir de la tension continue du bus d'alimentation,
- un circuit de commutation inséré entre les sorties des modules de l'ensemble de modules et les équipements du groupe d'équipements, et
- un dispositif de commande des modules et du circuit de commutation pour activer chaque équipement du groupe d'équipements en le reliant à l'un au moins des modules, et pour mettre en service un module de secours en cas de détection de défaillance d'un des autres modules.

Dans un mode de réalisation, le dispositif de commande comprend une unité centrale de commande et des unités de traitement intégrées respectivement aux différents modules pour commander la fourniture de tension alternative par un module à un équipement électrique alimenté par ce module en fonction d'informations qui sont transmises par l'unité centrale de commande. Les informations de commande transmises par l'unité centrale de commande peuvent être véhiculées par un bus auquel les unités de traitement des modules sont reliées. Le ou chaque module de secours peut être configurable pour être adapté à un quelconque des équipements auquel il est susceptible d'être relié, par chargement d'un programme d'application dans l'unité de traitement de ce module de secours à partir de l'unité centrale de commande.

Dans un autre mode de réalisation, le dispositif de commande comprend une unité centrale de commande reliée aux différents modules pour commander la fourniture de tension alternative par un module à un équipement électrique auquel il est relié en fonction d'informations reçues par l'unité centrale de commande.

Selon une particularité du système, l'unité centrale de commande est reliée à des capteurs associés à des équipements du groupe d'équipements pour commander la fourniture de tension alternative par un module en fonction d'informations reçues d'au moins un capteur associé à l'équipement auquel le module est relié et/ou d'informations reçues d'une unité de contrôle électronique (ECU) du moteur.

Selon une première variante de réalisation, la sortie d'un module excédentaire est reliée à une unité de commutation du circuit de commutation, laquelle unité de commutation ayant un premier état inactif dans lequel la sortie de module de secours n'est reliée à aucun équipement et des états actifs dans chacun desquels la sortie du module de secours est reliée à un équipement parmi une pluralité des équipements du groupe d'équipements. L'unité de commutation peut permettre de relier un module de secours à l'un quelconque de tous les équipements du groupe d'équipements.

Selon une deuxième variante de réalisation, la sortie d'un module de secours est reliée à une unité de commutation du circuit de commutation, laquelle unité de commutation ayant un premier état actif dans lequel la sortie du module de secours est reliée à un premier équipement en parallèle avec la sortie d'un autre module et au moins un deuxième état actif dans lequel la sortie du module de secours est reliée à un équipement autre que le premier équipement.

Selon encore une autre variante de réalisation le circuit de commutation comprend au moins une unité de commutation permettant de relier sélectivement la sortie d'un module à l'un parmi une pluralité d'équipements ne devant pas être activés simultanément.

### Brève description des dessins

L'invention sera mieux comprise à la lecture de la description faite ci-après, à titre indicatif mais non limitatif, en référence aux dessins annexés sur lesquels :
- la figure 1, déjà décrite, représente très schématiquement un schéma connu de production et la distribution d'énergie électrique dans un aéronef ;
- la figure 2 est une vue très schématique générale d'un circuit pour l'alimentation électrique et la commande d'équipements d'un moteur d'aéronef et de son environnement;
- la figure 3 est une vue plus détaillée d'un dispositif d'alimentation de tension électrique faisant partie du circuit de la figure 2 ;
- la figure 4 est une vue plus détaillée d'un système d'activation d'équipements électriques faisant partie du circuit de la figure 2, selon un mode de réalisation de l*'*invention ;
- la figure 5 est une vue schématique d'un module d'alimentation selon un mode de réalisation du système de la figure 4 ;
- la figure 6 est une vue schématique d'un module d'alimentation selon un autre mode de réalisation du système de la figure 4 ; et
- les figures 7 à 9 illustrent différentes configurations de l'association d'un ensemble de modules d'alimentation à un groupe d'équipements électriques dans un système tel que celui de la figure 4.

### Description détaillée des modes de réalisation de l'invention

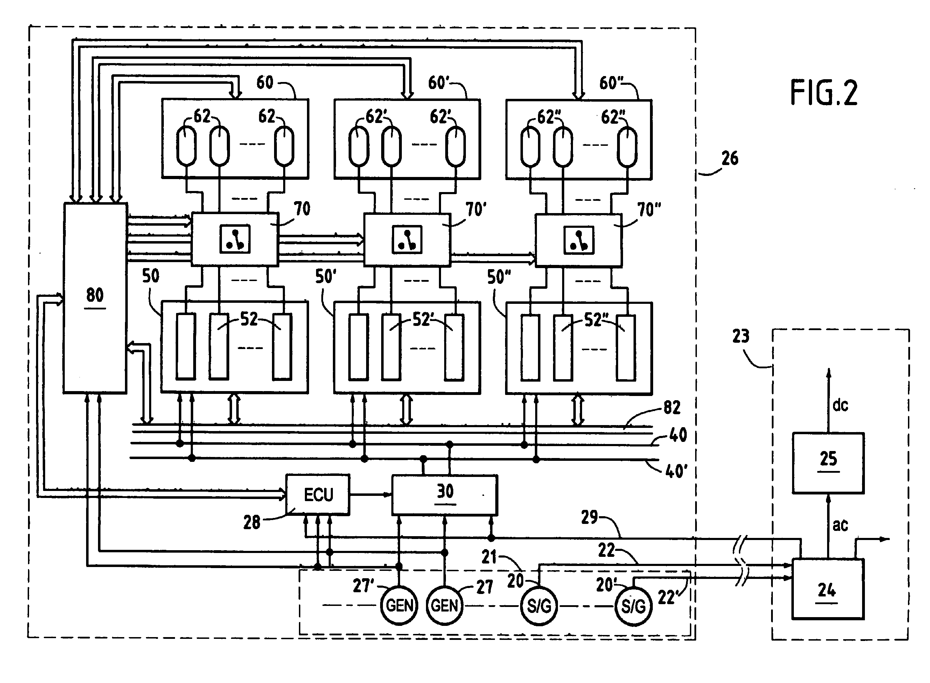

La figure 2 montre un schéma général d'un circuit pour l'alimentation électrique et la commande d'équipements électriques d'un moteur d'aéronef et de son environnement, notamment un moteur d'avion à turbine à gaz.

Le circuit de la figure 2 comporte, de façon connue, un ou deux générateurs 20, 20' tels que des S/G montés sur un boîtier de transmission ou AGB (schématisé par 21) couplé mécaniquement à un arbre de turbine du moteur. Les tensions alternatives fournies par les S/G 20 et 20' sont acheminées par des lignes 22 et 22' à un réseau électrique 23 de distribution d'énergie électrique à bord de l'avion, ou réseau électrique de bord d'avion. Un circuit 24 du réseau de bord avion fournit sur un ou plusieurs bus de distribution une tension alternative régulée typiquement 115 Vac ou 230 Vac ayant une fréquence variable en fonction de la vitesse de rotation de l'arbre de turbine. Le circuit 24 alimente également un circuit convertisseur de tension 25 qui fournit une tension continue régulée, typiquement 270 Vdc ou ± 270 Vdc sur un ou plusieurs bus. Les tensions produites par les circuits 24 et 25 alimentent différentes charges dans la zone de fuselage de l'avion.

Au niveau du moteur (schématisé par 26), des générateurs ou GEN 27, 27' distincts des générateurs 20, 20', tels que par exemple des PMA, montés sur l'AGB 21, fournissent une énergie électrique alternative à une unité de contrôle électronique du moteur, ou ECU 28 ainsi qu'à un dispositif d'alimentation sécurisée 30 faisant partie d'un réseau de distribution d'énergie électrique intégré au moteur. L'ECU 28 et le dispositif d'alimentation 30 sont également reliés au circuit 24 de tension alternative par une ligne 29 pour pouvoir être alimentés correctement tant qu'un régime moteur suffisant n'a pas été atteint pour assurer la fourniture de l'énergie électrique requise par les générateurs 27, 27'.

Le dispositif d'alimentation 30 fournit une tension continue, non nécessairement régulée mais incluant dans sa plage nominale la tension continue du réseau de bord de l'avion, par exemple 270 Vdc ou +/- 270 Vdc. Cette tension continue est fournie sur deux bus de distribution de courant continu tels que des bus HVDC 40, 40' qui alimentent un système d'alimentation et de commande d'équipements électriques du moteur et/ou de son environnement. Le système d'alimentation et de commande comprend des modules d'alimentation qui, dans l'exemple illustrés, sont répartis en plusieurs ensembles 50, 50', 50" associés à des groupes respectifs 60, 60', 60" d'équipements électriques 62, 62', 62" par l'intermédiaire de circuits de commutation respectifs 70, 70', 70".

Les équipements électriques comprennent notamment des moteurs électriques de pompes, des actionneurs pour des géométries variables du moteur d'avion ou pour des inverseurs de poussée ou des trappes de visite à actionnement électrique, des circuits résistifs de dégivrage ou d'antigivrage, tous ces équipements faisant partie du moteur d'avion ou de son environnement (nacelle du moteur, système de support du moteur et voilure proche).

Les modules d'alimentation 52, 52' et 52" des ensembles 50, 50', 50", ainsi que les circuits de commutation 70, 70', 70" sont commandés par un dispositif de commande comprenant une unité centrale de commande 80. Celle-ci est reliée par des ensembles de lignes 64, 64', 64" à des capteurs 66, 66', 66" associés à au moins certains des équipements électriques des groupes 60, 60', 60" et est reliée en outre à l'ECU 28. L'alimentation des composants de l'unité centrale de commande 80 est assurée de la même manière que pour les composants de l'ECU 28. Les modules d'alimentation 52, 52', 52" comprennent des onduleurs pour délivrer aux équipements 62, 62', 62" des groupes 60, 60', 60" une tension alternative obtenue à partir de la tension continue délivrée par les bus 40, 40' auxquels les modules d*'*alimentation 52, 52*'*, 52" sont reliés en parallèle. L'unité centrale de commande 80 commande les modules 52, 52', 52" et les circuits de commutations 70, 70', 70" pour activer chacun des équipements 62, 62', 62" en fonction d'informations reçues de l'ECU 28 et/ou de capteurs associés aux équipements. Par activation d'un équipement, on entend ici notamment l'entraînement de moteurs électriques, la mise en mouvement d'actionneurs électriques ou électromécaniques ou encore l'alimentation de circuits résistifs de chauffage.

Les modules d'alimentation de chaque ensemble sont semblables, la répartition des modules en différents ensembles et des équipements en différents groupes étant effectuée en fonction des puissances requises afin d'optimiser les tailles des onduleurs des modules d'alimentation. Le nombre d'ensembles de modules et de groupes d'équipements et de 3 dans l'exemple illustré. Il pourra bien entendu être différent de 3, voire même égal à 1 si des onduleurs sont utilisés d'une puissance convenant à tous les équipements. Comme décrit plus loin en détail, chaque ensemble de modules comprend au moins un module de secours à titre de redondance. Les circuits de commutation 70, 70', 70" sont commandés pour relier chaque équipement d'un groupe à un module de l'ensemble correspondant à ce groupe, éventuellement le module de secours, en cas de besoin.

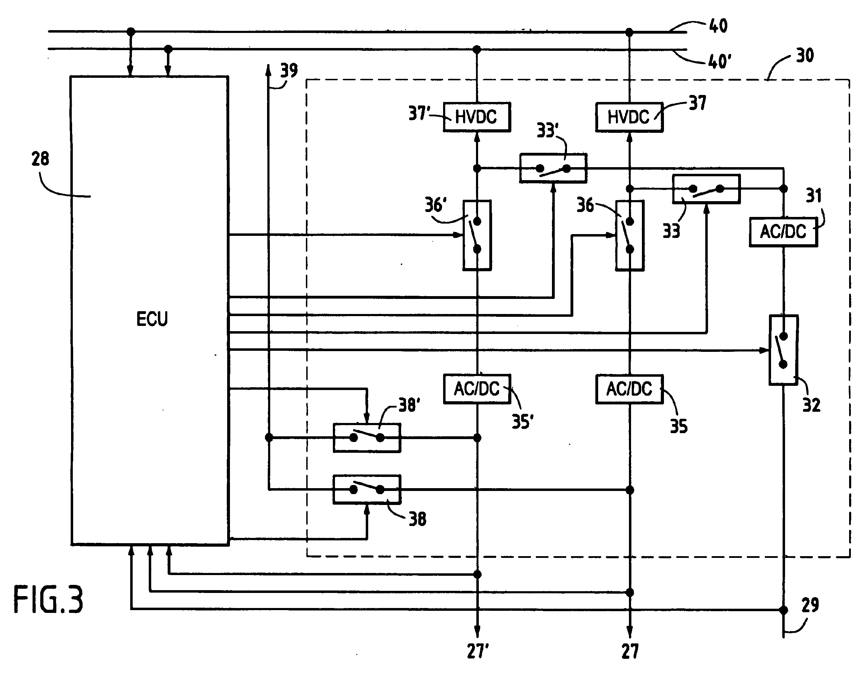

La figure 3 illustre de façon plus détaillée le dispositif d'alimentation sécurisée 30. Un circuit 31 convertisseur de tension alternative en tension continue (AC/DC) a son entrée reliée par un interrupteur 32 à une première entrée du circuit 30 connectée à la ligne 29. Deux autres circuits convertisseurs AC/DC 35, 35' ont leurs entrées reliées respectivement à une deuxième et une troisième entrées du circuit 30 recevant les tensions alternatives respectives des générateurs 27, 27'. Les sorties des convertisseurs 35, 35' sont respectivement reliées par des interrupteurs 36, 36' à des circuits de bus continu 37, 37', par exemple de type HVDC alimentant respectivement les bus 40, 40'. La sortie du convertisseur 31 est reliée également aux circuits 37, 37' par l'intermédiaire d'interrupteurs respectifs 33, 33'.

Le circuit de commutation formé par les interrupteurs 32, 33, 33', 36, 36' est commandé par l'ECU 28 en fonction des niveaux de tension détectés en sortie des générateurs 27, 27'. Lorsque les générateurs fournissent une puissance électrique suffisante, les interrupteurs 36, 36' sont fermés et les interrupteurs 32, 33, 33' sont ouverts. L'énergie électrique disponible sur les bus 40, 40' est tirée de celle fournie par les générateurs 27, 27' respectivement. Lorsque l'un et/ou l'autre des générateurs 27, 27' fournit une puissance insuffisante à bas régime du moteur d'avion ou en cas de défaillance, l'ouverture de l'interrupteur 36 et/ou de l'interrupteur 36' est commandée par l'ECU 28 ainsi que, concomitamment, la fermeture de l'interrupteur 32 ainsi que de l'interrupteur 33 et/ou de l'interrupteur 33'. L'énergie électrique disponible sur les bus 40, 40' est alors tirée de celle fournie par l'un des générateurs 27, 27' et la ligne 29, ou uniquement de celle fournie par la ligne 29. On dispose donc avec le dispositif d'alimentation 30 d'un noeud d'alimentation électrique sécurisée au niveau du moteur. Les bus 40, 40' alimentent les ensembles de modules 50, 50', 50" ainsi que l'unité centrale de commande 80 pour l'activation des équipements électriques 62, 62', 62". Il est toutefois possible d'alimenter un ou plusieurs équipements électriques directement à partir de sortie des générateurs 27, 27', par exemple un circuit de dégivrage de la nacelle du moteur ou de la voilure relié à une ligne 39 qui est connectée aux sorties de générateurs 27, 27' par des interrupteurs respectifs 38, 38'. Les interrupteurs 38, 38' sont commandés par l'ECU 28 pour alimenter la ligne 39 en fonction des besoins.

L'utilisation de deux bus 40, 40' alimentés séparément permet de pallier la défaillance d'un bus ou de son alimentation, et de répartir l'énergie électrique continue distribuée.

L'utilisation de deux générateurs 27, 27' permet de pallier la défaillance d'un générateur tout en conservant une alimentation sécurisée par la liaison 29 avec le réseau de bord de l'avion et de répartir la puissance électrique fournie. L'utilisation d'un seul générateur alimentant deux bus 40, 40' en parallèle est toutefois envisageable. Il est aussi possible d'envisager la présence d'un seul bus d'alimentation alimenté en parallèle à partir de deux générateurs ou à partir d'un seul générateur et, le cas échéant, du réseau de bord de l'avion.

En outre, la tension du réseau de bord de l*'*avion reçue par le dispositif d*'*alimentation sécurisée pourra être une tension continue. Une conversion AC/DC de cette tension au niveau du dispositif 30 n*'*est alors plus nécessaire de sorte que le convertisseur 31 peut être omis ou remplacé le cas échéant par un convertisseur DC/DC.

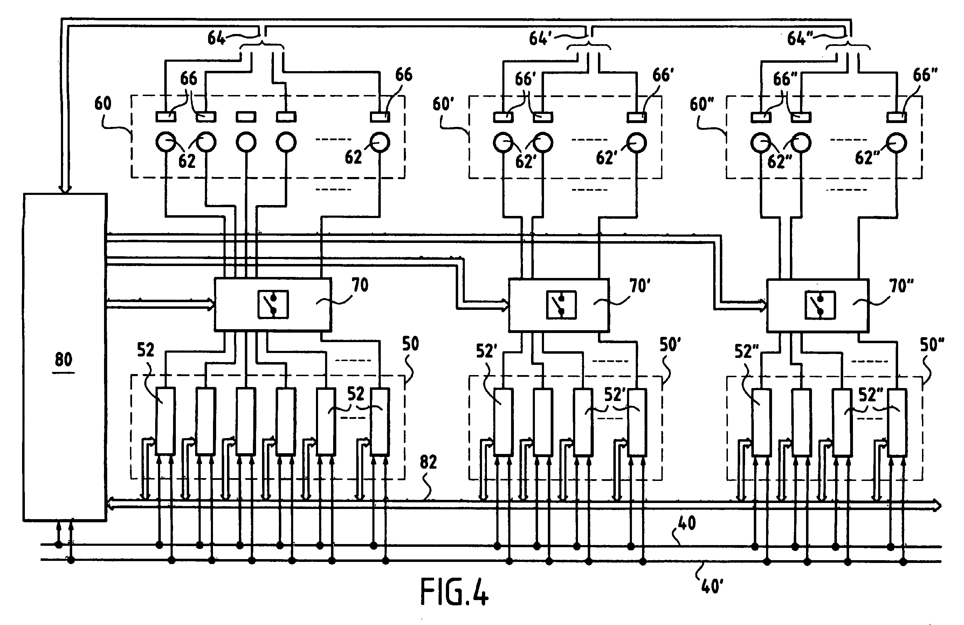

La figure 4 illustre de façon plus détaillée le circuit d'activation et d'alimentation des équipements électriques 62, 62', 62" à partir des bus d'alimentation continue 40, 40'.

Les équipements électriques peuvent notamment comprendre :
- des actionneurs pour des géométries variables du moteur à turbine à gaz, telles que des vannes de décharge de compresseur VBV ("Variable Bleed Valve"), des organes de calage d'aubes de stator à calage variable VSV ("Variable Stator Vane") d'étages redresseurs de compresseur, des vannes de décharge transitoire de compresseur TBV ("Transcient Bleed Valve") commandés lors de phases particulières de vol, notamment au décollage, ou encore des jeux au sommet d'aubes de rotor de turbine (jeu entre le sommet des aubes et le carter de turbine), pour la turbine basse pression LPTACC ("Low Pressure Turbine Active Clearance Control") ou la turbine haute pression HPTACC ("High Pressure Turbine Active Clearance Control"),
- des organes de circuit d'alimentation en carburant, tels que des moteurs de pompe carburant haute pression, et de pompe carburant basse pression et des vannes de réglage de débit,
- des organes de circuit de lubrifiant, tels que des moteurs de pompe d'alimentation, des dispositifs de séparation air/lubrifiant ("Breather"), des pompes de récupération SCAV ("Scavenge"),
- des charges électriques au niveau de la nacelle du moteur tels que des actionneurs électromécaniques pour des inverseurs de poussée à actionnement électrique ETRAS ("Electric Thrust Reverser Actuating Systems"), des actionneurs électromécaniques pour des trappes de visite ou de maintenance.

Certains équipements nécessitent une puissance électrique plus faible que d'autres. Comme indiqué plus haut, les équipements peuvent être répartis en plusieurs groupes en fonction de la puissance qu'ils requièrent. Dans l'exemple ici considéré, les équipements sont répartis en trois groupes 60, 60', 60" correspondant à trois niveaux de puissance distincts :
Groupe 60 : faible puissance pour les équipements 62 tels qu'une géométrie variable VBV, VSV, TBV, LPTACC, HPTACC, une pompe d'alimentation ou de récupération du circuit lubrifiant, ou un actionneur de trappe de visite ou de maintenance au niveau de la nacelle, ...
Groupe 60' : moyenne puissance pour les équipements 62' tels qu'un actionneur de vanne de réglage de débit carburant, un dispositif de séparation air/lubrifiant, ...
Groupe 60" : forte puissance pour les équipements 62" tels qu'un moteur de pompe haute pression ou basse pression du circuit carburant, un actionneur d'inverseur de poussée, un circuit de dégivrage ou d'antigivrage de nacelle, ....

Des capteurs 66, 66', 66", tels que par exemple des capteurs d'état, des capteurs de position (par exemple des capteurs de fin de course), des capteurs de débit, des capteurs de température sont associés à certains au moins des équipements et reliés à l'unité centrale de commande 80 par des lignes 64, 64', 64".

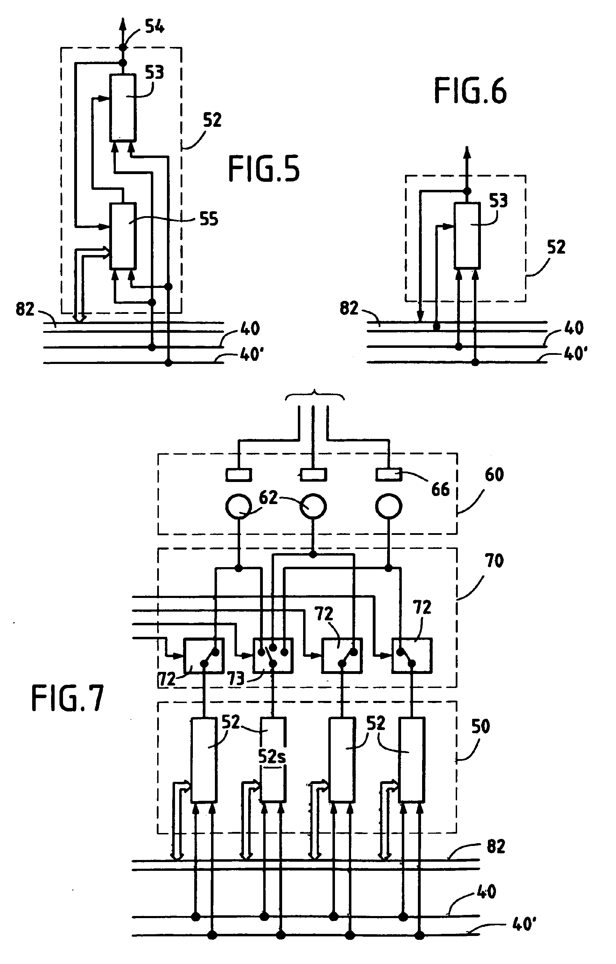

Dans le mode de réalisation des figures 4 et 5, chaque module 52, 52', 52" d'un ensemble de modules 50, 50', 50", par exemple un module 52 (figure 5), comprend un onduleur 53 connecté aux bus 40, 40' pour délivrer une tension alternative sur la sortie 54 du module, l'onduleur étant adapté à la puissance à délivrer souhaitée. Le module 52 comprend en outre une unité de traitement 55 qui est alimentée par les bus 40, 40' et qui est reliée à l'unité centrale de commande 80 par un bus 82. L'unité de traitement 55 commande le fonctionnement de l'onduleur 53 et est reliée à la sortie de celui-ci pour asservir le fonctionnement de l'onduleur.

L'unité de traitement 55 commande le fonctionnement de l'onduleur 53 pour activer un équipement auquel l'onduleur est relié par l'intermédiaire du circuit de commutation 70 en fonction d'informations de commande reçues de l'unité centrale de commande 80. Ces informations de commande sont élaborées à partir d'informations reçues d'un ou plusieurs capteurs associés à l'équipement à activer et/ou de l'ECU 28.

L'unité centrale de commande 80 reçoit en outre de l'unité de traitement 55 une information sur le bon fonctionnement de l'onduleur 53 pour, en cas de détection de défaillance, commander le circuit de commutation 70 afin de relier l'équipement à activer à un module excédentaire ou module de secours faisant partie de l'ensemble 50, comme décrit plus loin.

Il est possible, en variante, de transmettre sur le bus 82 les informations reçues des capteurs et de l'ECU 28, l'unité de traitement 55 étant programmée pour commander le fonctionnement de l'onduleur 53 en fonction de ces informations afin d'activer l'équipement électrique associé via le circuit de commutation 70. Dans ce cas, si un module 62 est défaillant, un module de secours de l'ensemble 60 peut être configuré par téléchargement dans celui-ci, à partir de l'unité centrale de commande 80, du programme d'application correspondant à l'équipement auquel le module de secours doit être relié, le circuit 70 étant commandé pour interrompre la liaison entre l'équipement concerné et le module défaillant et établir la liaison entre cet équipement et le module de secours.

On notera que l'unité centrale de commande 80 pourrait être intégrée à l'ECU 28.

La figure 6 illustre une variante de réalisation dans laquelle les modules 52, 52', 52", par exemple un module 52, comprennent essentiellement l'onduleur 53, celui-ci étant commandé par une liaison dédiée à partir de l'unité centrale de commande et fournissant à celle-ci par une autre liaison dédiée une information sur la tension en sortie de l'onduleur.

La figure 7 illustre un mode de réalisation d'un ensemble 50, 50', 50" de modules, par exemple un ensemble 50 associé à un groupe 60 d'équipements à travers un circuit de commutation 70. L'ensemble 50 comprend des modules 52 dont le nombre est supérieur à celui des équipements 62 du groupe 60 correspondant, de manière à ménager au moins un module de secours 52s semblable aux autres modules. Dans l'exemple illustré, on a représenté un groupe de 3 équipements seulement, par souci de simplicité, le nombre de modules étant égal à 4. Selon le nombre total de modules dans l'ensemble 50, on pourra prévoir plus d'un module de secours.

En fonctionnement normal, les équipements 62 sont reliés à des modules respectifs 52 à travers des interrupteurs 72 du circuit 70 qui sont alors fermés. Le module de secours 52s est relié à un commutateur 73 du circuit 70 par lequel il peut être connecté à l'un quelconque des équipements 62. Les interrupteurs 72 et le commutateur 73 sont commandés par l'unité centrale de commande 80 par des lignes de commande dédiées.

En cas de défaillance détectée d'un des modules 52, le module de secours 52s est activé et l'unité centrale 80 commande, d'une part, l'ouverture de l'interrupteur 72 reliant le module défaillant à l'équipement 62 associé et commande la connexion de celui-ci au module de secours 52s via le commutateur 73.

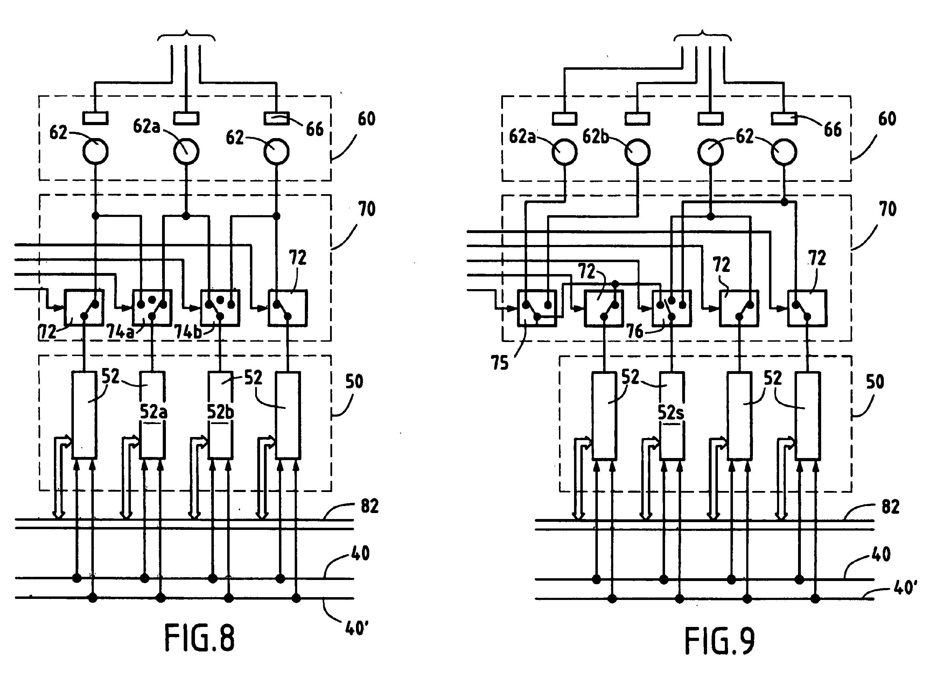

La figure 8 illustre un autre mode de réalisation d'un ensemble 50, 50' ou 50" de modules, par exemple un ensemble 50 associé à un groupe 60 d'équipements à travers un circuit de commutation 70. L'ensemble 50 comprend des modules 52 dont le nombre est supérieur à celui des équipements 62 du groupe 60 correspondant, l'un 62a des équipements étant en fonctionnement normal alimenté en parallèle par deux modules 52a, 52b à travers des commutateurs 74a, 74b du circuit de commutation 70. Les autres équipements sont reliés à des autres modules respectifs à travers des interrupteurs 72. Les interrupteurs 72 et commutateurs 74a, 74b sont commandés par l'unité de commande 80 par des lignes de commande dédiées. Les commutateurs 74a, 74b permettent, le cas échéant, de relier le module 52a ou le module 52b à un équipement autre que l'équipement 62a, permettant à chaque module 52a, 52b de remplir le rôle de module de secours.

En cas de défaillance détectée d'un module 52 autre que les modules 52a, 52b, l'unité centrale 80 commande le commutateur 74a ou 74b pour connecter le module 52a ou 52b à l'équipement associé au module défaillant et commande l'ouverture de l'interrupteur 72 reliant le module défaillant à l'équipement associé. En cas de défaillance détectée de l'un des modules 52a, 52b, l'unité centrale 80 commande le commutateur associé 74a ou 74b pour isoler la sortie du module défaillant.

Ainsi, en mode de secours, l'équipement 62a n'est alimenté que par l'un des modules 52a, 52b. Ce mode de réalisation est donc envisageable dans le cas où un mode de fonctionnement dégradé est possible avec alimentation sous puissance réduite de l'équipement 62a.

La figure 9 illustre encore un autre mode de réalisation d'un ensemble 50, 50' ou 50" de modules, par exemple un ensemble 50 associé à un groupe 60 d'équipements à travers un circuit de commutation 70. Ce mode de réalisation convient dans le cas où deux équipements 62a, 62b ne sont jamais activés simultanément et peuvent être reliés par l'intermédiaire d'un commutateur 75 à un même module d'alimentation. Il peut s'agir par exemple d'actionneurs d'inverseur de poussée et de trappe de visite ou de maintenance.

Dans le mode de réalisation de la figure 9, le nombre de modules 52 peut être égal, voire même inférieur à celui des équipements 62, tout en ayant un module de secours 52s. Ainsi, l'un des modules 52 autre que le module de secours est normalement relié au commutateur 75 par un interrupteur 72 tandis que les autres modules 52 autres que le module de secours sont reliés aux autres équipements 62 par l'intermédiaire d'interrupteurs respectifs 72. Le module de secours 52s est relié à un commutateur 76 permettant de le relier au commutateur 75 ou aux équipements 62 autres que les équipements 62a, 62b. Les interrupteurs 72 et commutateurs 75, 76 sont commandés par l'unité centrale de commande 80 par des lignes de commande dédiées.

En cas de défaillance détectée de l'un des modules 62, l'unité centrale 80 commande l'activation du module de secours 62a, commande l'ouverture de l'interrupteur 72 associé au module défaillant et commande le commutateur 76 pour relier le module de secours au commutateur 75 ou à l'équipement 72 associé au module défaillant.

Ainsi, une activation sécurisée d'un groupe d'équipements est obtenue par mutualisation des ressources constituées par un ensemble de modules d'alimentation semblables tout en limitant le nombre de modules nécessaires puisque la sécurisation de l'activation des équipements d'un groupe ne nécessite pas d'associer deux modules d'alimentation à chaque équipement par souci de redondance.

Dans les modes de réalisation décrits ci-avant, des modules d'alimentation sont associés en fonctionnement à des équipements respectifs, seul le ou chaque module de secours pouvant être associé à différents équipements. Il est possible d'envisager une modularité plus grande, sans individualisation de certains modules, chaque module d'alimentation pouvant être associé à l'un parmi plusieurs équipements. L'allocation d'un module à un équipement est alors commandée par l'unité centrale de commande par action sur le circuit de commutation et par assignation d'une fonction particulière au module d'alimentation, par exemple, comme décrit plus haut, par téléchargement d'un programme applicatif dans une unité de traitement du module.

Bien que l'on ait décrit ci-avant la réalisation d'un dispositif d'alimentation 30 au niveau du moteur pour délivrer une tension continue sur les bus 40, 40', une alimentation de ces bus directement à partir d'une tension régulée du circuit de bord de l'avion est envisageable.

## Revendications

1. Système d'alimentation et de commande d'équipements électriques d'un moteur d'aéronef ou de son environnement, comprenant :
- au moins un bus d'alimentation (40, 40') en tension électrique continue,
- au moins un ensemble (50 ou 50' ou 50") de modules d'alimentation reliés en parallèle au bus d'alimentation, ledit ensemble étant associé à un groupe respectif (60 ou 60' ou 60") d'équipements électriques, les modules (52 ou 52' ou 52") de l'ensemble étant en nombre supérieur au nombre minimum nécessaire pour l'activation des équipements électriques (62 ou 62' ou 62") du groupe de manière à ménager au moins un module de secours (52s, 52a ou 52b), chaque module comportant un convertisseur de tension (53) pour fournir en sortie du module une tension alternative à partir de la tension continue du bus d'alimentation,
- un circuit de commutation (70 ou 70' ou 70") inséré entre les sorties des modules de l'ensemble de modules et les équipements du groupe d'équipements, et
- un dispositif de commande des modules et du circuit de commutation pour activer chaque équipement du groupe d'équipements en le reliant à l'un au moins des modules, et pour mettre en service un module de secours en cas de détection de défaillance d'un des autres modules.

2. Système selon la revendication 1, dans lequel le dispositif de commande comprend une unité centrale de commande (80) et des unités de traitement (55) intégrées respectivement aux différents modules pour commander la fourniture de tension alternative par un module à un équipement électrique alimenté par ce module en fonction d'informations qui sont transmises par l'unité centrale de commande.

3. Système selon la revendication 2, dans lequel les informations de commande transmises par l'unité centrale de commande (80) sont véhiculées par un bus (82) auquel les unités de traitement (55) des modules sont reliées.

4. Système selon l'une quelconque des revendications 2 et 3, dans lequel le ou chaque module de secours (52s ; 52a ou 52b) est configurable pour être adapté à un quelconque des équipements auquel il est susceptible d'être relié, par chargement d'un programme d'application dans l'unité de traitement de ce module de secours à partir de l'unité centrale de commande (80).

5. Système selon la revendication 1, dans lequel le dispositif de commande comprend une unité centrale de commande (80) reliée aux différents modules (52) pour commander la fourniture de tension alternative par un module à un équipement électrique auquel il est relié en fonction d'informations reçues par l'unité centrale de commande.

6. Système selon l'une quelconque des revendications 2 à 5, dans lequel l'unité centrale de commande (80) est reliée à des capteurs (66, 66', 66") associés à des équipements (62, 62', 62") du groupe d'équipements pour commander la fourniture de tension alternative par un module en fonction d'informations reçues d'au moins un capteur associé à l'équipement auquel le module est relié et/ou d'informations reçues d'une unité de contrôle électronique (ECU) du moteur.

7. Système selon l'une quelconque des revendications 1 à 6, dans lequel la sortie d'un module de secours (52s) .est reliée à une unité de commutation (73) du circuit de commutation (70), laquelle unité de commutation ayant un premier état inactif dans lequel la sortie du module de secours n'est reliée à aucun équipement et des états actifs dans chacun desquels la sortie du module de secours est reliée à un équipement parmi une pluralité des équipements (62) du groupe d'équipements.

8. Système selon la revendication 7, dans lequel l'unité de commutation (73) permet de relier un module de secours (52s) à l'un quelconque de tous les équipements (62) du groupe d'équipements.

9. Système selon l'une quelconque des revendications 1 à 6, dans lequel la sortie d'un module de secours (52a ou 52b) est reliée à une unité de commutation (74a ou 74b) du circuit de commutation (70), laquelle unité de commutation ayant un premier état actif dans lequel la sortie du module de secours est reliée à un premier équipement (62a) en parallèle avec la sortie d'un autre module et au moins un deuxième état actif dans lequel la sortie du module de secours est reliée à un équipement autre que le premier équipement.

10. Système selon l'une quelconque des revendications 1 à 9, dans lequel le circuit de commutation (70) comprend au moins une unité de commutation (75) permettant de relier sélectivement la sortie d'un module à l'un parmi une pluralité d'équipements (62a, 62b) ne devant pas être activés simultanément.

## Claims

1. A system for powering and controlling electrical equipment of an aircraft engine or of its environment, the system comprising:
at least one DC voltage power supply bus (40, 40');
at least one set (50 or 50' or 50") of power supply modules connected in parallel to the power supply bus, said set being associated with a respective group (60 or 60' or 60") of pieces of electrical equipment, the number of modules (52 or 52' or 52") of the set being greater than the minimum number needed to activate the electrical equipment (62 or 62' or 62") of the group so as to provide at least one emergency module (52s, 52a or 52b), each module comprising a voltage converter (53) for supplying an alternating voltage at the output from the module and derived from the DC voltage of the power supply bus;
a selector circuit (70 to 70' or 70") inserted between the outputs of the modules of the set of modules and the pieces of equipment of the equipment group; and
an arrangement for controlling the modules and the selector circuit to activate each piece of equipment of the equipment group by connecting it to at least one of the modules, and to put an emergency module into service in the event of a failure being detected in one of the other modules.

2. A system according to claim 1, in which the control device comprises a central control unit (80) and processor units (55) integrated respectively in the various modules to control the supply of alternative voltage by a module to a piece of electrical equipment powered by said module as a function of information transmitted by the central control unit.

3. A system according to claim 2, in which the control information transmitted by the central control unit (80) is conveyed by a bus (82) to which the processor units (55) of the modules are connected.

4. A system according to claim 2 or claim 3, in which the or each emergency module (52s; 52a or 52b) is configurable to be adapted to any of the equipment to which it might be connected, by the central control unit (80) charging an application program in the processor unit of the emergency module.

5. A system according to claim 1, in which the control device comprises a central control unit (80) connected to the various modules (52) to cause alternating voltage to be supplied by a module to a piece of electrical equipment to which it is connected as a function of information received from the central control unit.

6. A system according to any one of claims 2 to 5, in which the central control unit (80) is connected to sensors (66, 66', 66") associated with pieces of equipment (62, 62', 62") of the equipment group to control the supply of alternating voltage by a module as a function of information received from at least one sensor associated with the equipment to which the module is connected and/or as a function of information received from an electronic control unit (ECU) of the engine.

7. A system according to any one of claims 1 to 6, in which the output from an emergency module (52s) is connected to a selector unit (73) of the selector circuit (70), which selector unit has a first state that is inactive in which the output from the emergency module is not connected to any equipment, and other states that are active and in each of which the output from the emergency module is connected to one piece of equipment selected from a plurality of pieces of equipment (62) of the equipment group.

8. A system according to claim 7, in which the selector unit (73) enables an emergency module (52s) to be connected to any one of the pieces of equipment (62) of the equipment group.

9. A system according to any one of claims 1 to 6, in which the output from an emergency module (52a or 52b) is connected to a selector unit (74a or 74b) of the selector circuit (70), which selector unit has a first state that is active and in which the output from the emergency module is connected to a first piece of equipment (62a) in parallel with the output of another module, and at least one second state that is active and in which the output from the emergency module is connected to a piece of equipment other than the first piece of equipment.

10. A system according to any one of claims 1 to 9, in which the selector circuit (70) comprises at least one selector unit (75) enabling the output of a module to be connected selectively to one of out of a plurality of pieces of equipment (62a, 62b) that do not need to be activated simultaneously.

## Patentansprüche

1. System zur Versorgung und Steuerung elektrischer Einrichtungen eines Flugzeugtriebwerks oder seiner Umgebung, umfassend:
- wenigstens einen Bus (40, 40') zur Versorgung mit elektrischer Gleichspannung,
- wenigstens eine Einheit (50 oder 50' oder 50") aus Versorgungsmodulen, die zu dem Versorgungsbus parallel geschaltet sind, wobei die Einheit einem jeweiligen Aggregat (60 oder 60' oder 60") elektrischer Einrichtungen zugeordnet ist, wobei die Anzahl der Module (52 oder 52' oder 52") der Einheit größer als die für die Aktivierung der elektrischen Einrichtungen (62 oder 62' oder 62") des Aggregats erforderliche Mindestanzahl ist, so daß wenigstens ein Notmodul (52s, 52a oder 52b) geschont wird, wobei jedes Modul einen Spannungswandler (53) aufweist, um am Ausgang des Moduls mittels der Gleichspannung des Versorgungsbusses eine Wechselspannung zu liefern,
- einen Schaltkreis (70 oder 70' oder 70"), der zwischen den Ausgängen der Module der Moduleinheit und den Einrichtungen des Einrichtungsaggregats eingefügt ist, sowie
- eine Vorrichtung zum Steuern der Module und des Schaltkreises, um jede Einrichtung des Einrichtungsaggregats **dadurch** zu aktivieren, daß sie mit wenigstens einem der Module verbunden wird, und um bei Erfassung eines Ausfalls von einem der anderen Module ein Notmodul in Betrieb zu setzen.

2. System nach Anspruch 1, bei dem die Steuervorrichtung eine zentrale Steuereinheit (80) sowie Verarbeitungseinheiten (55), die jeweils in die verschiedenen Module integriert sind, umfasst, um die Lieferung von Wechselspannung durch ein Modul an eine durch dieses Modul versorgte elektrische Einrichtung in Abhängigkeit von Informationen, die mittels der zentralen Steuereinheit übertragen werden, zu steuern.

3. System nach Anspruch 2, bei dem die mittels der zentralen Steuereinheit (80) übertragenen Steuerinformationen über einen Bus (82) befördert werden, mit dem die Verarbeitungseinheiten (55) der Module verbunden sind.

4. System nach einem der Ansprüche 2 und 3, bei dem das oder jedes Notmodul (52s; 52a oder 52b) konfigurierbar ist, um durch Laden eines Anwendungsprogramms in die Verarbeitungseinheit dieses Notmoduls aus der zentralen Steuereinheit (80) an eine beliebige Einrichtung angepaßt zu werden, mit der es verbunden werden kann.

5. System nach Anspruch 1, bei dem die Steuervorrichtung eine mit den verschiedenen Modulen (52) verbundene zentrale Steuereinheit (80) umfaßt, um die Lieferung von Wechselspannung durch ein Modul an eine elektrische Einrichtung, mit der es verbunden ist, in Abhängigkeit von durch die zentrale Steuereinheit empfangenen Informationen zu steuern.

6. System nach einem der Ansprüche 2 bis 5, bei dem die zentrale Steuereinheit (80) mit Sensoren (66, 66', 66"), die Einrichtungen (62, 62', 62") des Einrichtungsaggregats zugeordnet sind, verbunden ist, um die Lieferung von Wechselspannung durch ein Modul in Abhängigkeit von Informationen zu steuern, die von wenigstens einem Sensor empfangen werden, welcher der Einrichtung zugeordnet ist, mit der das Modul verbunden ist, und/oder in Abhängigkeit von Informationen, die von einer elektronischen Kontrolleinheit (ECU) des Triebswerks empfangen werden.

7. System nach einem der Ansprüche 1 bis 6, bei dem der Ausgang eines Notmoduls (52s) mit einer Schalteinheit (73) des Schaltkreises (70) verbunden ist, wobei die Schalteinheit einen ersten inaktiven Zustand hat, in dem der Ausgang des Notmoduls mit keiner Einrichtung verbunden ist, sowie aktive Zustände, in denen jeweils der Ausgang des Notmoduls mit einer Einrichtung aus einer Vielzahl von Einrichtungen (62) des Einrichtungsaggregats verbunden ist.

8. System nach Anspruch 7, bei dem die Schalteinheit (73) ermöglicht, ein Notmodul (52s) mit irgendeiner aller Einrichtungen (62) des Einrichtungsaggregats zu verbinden.

9. System nach einem der Ansprüche 1 bis 6, bei dem der Ausgang eines Notmoduls (52a oder 52b) mit einer Schalteinheit (74a oder 74b) des Schaltkreises (70) verbunden ist, wobei die Schalteinheit einen ersten aktiven Zustand hat, in dem der Ausgang des Notmoduls mit einer ersten Einrichtung (62a) parallel zum Ausgang eines anderen Moduls verbunden ist, sowie wenigstens einen zweiten aktiven Zustand, in dem der Ausgang des Notmoduls mit einer anderen Einrichtung als der ersten Einrichtung verbunden ist.

10. System nach einem der Ansprüche 1 bis 9, bei dem der Schaltkreis (70) wenigstens eine Schalteinheit (75) umfaßt, die ermöglicht, den Ausgang eines Moduls selektiv mit einer aus einer Vielzahl von Einrichtungen (62a, 62b), die nicht gleichzeitig aktiviert werden müssen, zu verbinden.
